# EUROPEAN PATENT APPLICATION

(11) **EP 4 627 963 A1**
(43) Date of publication of application: **08.10.2025**
(21) Application number: 23910232.0
(22) Date of filing: 18.12.2023
(51) Int. Cl.: A44C 5/14

(54) **WEARABLE DEVICE, ELECTRONIC DEVICE, AND MOUNTING SUPPORT**

(30) Priority: 30.12.2022 CN 202211724009
(71) Applicant: Huawei Technologies Co., Ltd., Shenzhen, Guangdong 518129 (CN)
(72) Inventor: YUAN, Shenglan, Shenzhen, Guangdong 518129 (CN); HE, Qian, Shenzhen, Guangdong 518129 (CN); ZHAO, Menglong, Shenzhen, Guangdong 518129 (CN); GONG, Lexing, Shenzhen, Guangdong 518129 (CN); ZOU, Lin, Shenzhen, Guangdong 518129 (CN); WANG, Xu, Shenzhen, Guangdong 518129 (CN)
(74) Representative: Maiwald GmbH
(86) International application number: PCT/CN2023/139456
(87) International publication number: WO 2024/140302

(57) **Abstract**

A wearable device, a mounting bracket (21), and an electronic device are provided. The wearable device includes a main portion (1) and a mounting bracket (21). The main portion (1) has a first fitting portion (11) and a second fitting portion (12). The mounting bracket (21) has a first limiting member (211) configured to fit with the first fitting portion (11) and a second limiting member (212) configured to fit with the second fitting portion (12). The second limiting member (212) has a first recess portion (212a). The second fitting portion (12) has a protrusion portion (123a), and the second fitting portion (12) is capable of moving in a length direction or a width direction of the main portion relative to the main portion (1). The first limiting member (211) is located on a side wall of the mounting bracket (21) and at least partially protrudes relative to the mounting bracket (21). The second limiting member (212) is disposed on a bottom wall of the mounting bracket (21) and extends in a thickness direction of the wearable device. When the fitting portions (11, 12) fit with the corresponding limiting members (211, 212), the main portion (1) is mounted on the mounting bracket (21). When the fitting portions (11, 12) release fitting with the corresponding limiting members (211, 212), the main portion (1) is capable of being detached from the mounting bracket (21). In this design, mounting and detaching processes of the main portion (1) are very convenient.

## Description

The present invention claims priority to Chinese Patent Application No. 202211724009.8, filed with the China National Intellectual Property Administration on December 30, 2022 and entitled "WEARABLE DEVICE, ELECTRONIC DEVICE, AND MOUNTING BRACKET", which is incorporated herein by reference in its entirety.

### TECHNICAL FIELD

The present invention relates to the field of electronic device technologies, and in particular, to a wearable device, an electronic device, and a mounting bracket.

### BACKGROUND

With development of technologies, wearable devices such as smartwatches are increasingly widely used. A watch body of the wearable device such as the smart watch, is relatively fastened to a watch band, which makes it very difficult for detaching the watch body from the watch band. A professional tool or professional help is required, which is very inconvenient for use.

### SUMMARY

This application provides a wearable device, an electronic device, and a mounting bracket, to reduce difficulty in mounting and detaching a main portion and a mounting bracket of the wearable device.

This application provides a wearable device. The wearable device includes:
a mounting bracket; and
a main portion, where the main portion is detachably mounted on the mounting bracket, where
a first fitting portion and a second fitting portion are disposed on the main portion, a first limiting member and a second limiting member are disposed on the mounting bracket, the first limiting member is configured to fit with the first fitting portion, the second fitting portion is capable of moving relative to the main portion, the second limiting member has a first recess portion, the second fitting portion has a protrusion portion, and when the second fitting portion is capable of moving in a length direction or a width direction of the main portion relative to the main portion, the protrusion portion is capable of extending into or being detached from the first recess portion;
the first limiting member is located on a side wall of the mounting bracket and protrudes relative to the side wall of the mounting bracket, and is configured to limit relative positions of the main portion and the mounting bracket in a thickness direction of the wearable device, and the second limiting member is disposed on a bottom wall of the mounting bracket and extends in the thickness direction of the wearable device, and is configured to limit relative positions of the main portion and the mounting bracket in a length direction and/or a width direction of the wearable device;
when the protrusion portion fits with the first recess portion, and the first fitting portion fits with the first limiting member, the main portion is mounted on the mounting bracket; and
when the protrusion portion is detached from the first recess portion, the second fitting portion releases fitting with the second limiting member, and the first fitting portion is capable of being detached from the first limiting member.

In the solution provided in embodiments of this application, detachable mounting between the main portion and a wearing portion is implemented through fitting between the limiting member and the fitting portion. This is easy to operate, and the main portion can also be completely detached from the wearing portion 2, thereby better meeting an actual use requirement. When the wearable device is damaged, the wearing portion may be separately replaced or the main portion may be detached according to a requirement, to maintain the main portion and reduce interference of the wearing portion in a maintenance process, thereby helping reduce maintenance difficulty of the wearable device. During detaching, the second fitting portion may be driven to release fitting between the second fitting portion and the second limiting member, and the main portion may be directly driven to move relative to the mounting bracket, so that the first limiting portion can release fitting with the first fitting portion, to complete detaching, which is very convenient for use.

In a possible implementation, the first limiting member is capable of moving relative to the mounting bracket, and when the main portion is located on the mounting bracket, the first limiting member is capable of extending into the first fitting portion, or the first limiting member is capable of being detached from the first fitting portion.

The first limiting member is capable of moving relative to the mounting bracket, so that the first limiting member fits with the first fitting portion.

In a possible implementation, the mounting bracket has a second recess portion, at least a part of the first limiting member is located in the second recess portion, and the first limiting member is capable of moving along the second recess portion, so that the first limiting member is capable of extending out or retracting along an opening of the second recess portion.

The second recess portion can guide movement of the first limiting member, to improve movement stability of the first limiting member, and help the first limiting member fit with or release fitting with the first fitting portion.

In a possible implementation, a first elastic member is disposed between the first limiting member and a bottom wall of the second recess portion, and when the first limiting member retracts into the second recess portion, the first elastic member is compressed, and the first elastic member is configured to drive the first limiting member to extend out along the opening of the second recess portion.

Through disposition of the first elastic member, movement of the first limiting member can be controlled, so that the first limiting member is driven to extend out along the first through hole and fit with the first fitting portion. When the first limiting member fits with the first fitting portion, the first elastic member can reduce a possibility that the first limiting member retracts due to an accidental touch or the like, and reduce a possibility that the first limiting member is detached from the first fitting portion, thereby improving stability of the first limiting member and the second fitting portion.

In a possible implementation, the first limiting member includes a first limiting section and a second limiting section, a cross-sectional area of the first limiting section is greater than a cross-sectional area of the second limiting section, the second limiting section is located on a side that is of the first limiting section and that is away from the bottom wall of the second recess portion, a third limiting member is disposed at the opening of the second recess portion, the third limiting member has a first through hole, the first through hole communicates with the second recess portion, and at least a part of the even-numbered second limiting section is capable of extending out along the first through hole; and
at least a part of the first limiting section abuts against a side that is of the third limiting member and that faces the second recess portion.

In a possible implementation, the first elastic member is located on a side that is of the first limiting member and that is away from the second limiting member.

In this manner, it is convenient for the first elastic member to connect the first limiting member and a side wall of the second recess portion.

In a possible implementation, a first guiding portion is disposed on the bottom wall of the second recess portion, the first guiding portion protrudes relative to the bottom wall of the second recess portion, and at least a part of the first elastic member is sleeved on the first guiding portion.

The at least a part of the first elastic member is sleeved on the first guiding portion, so that mounting stability of the first elastic member is improved, and when the first elastic member is deformed, the first elastic member can be further guided to shrink or extend, thereby improving stability present when the first elastic member is deformed, and improving movement stability of the first limiting member.

In a possible implementation, the second limiting section has a first guiding surface, and the first guiding surface is located at an end that is of the second limiting section and that is away from the first limiting section, and is configured to be in contact with the main portion.

Through disposition of the first guiding surface, the first limiting member can easily fit with the first fitting portion, and the main portion can be easily mounted on the mounting bracket. During mounting, the main portion is placed into the mounting bracket in a mounting direction. In a placement process, the main portion is in contact with the first guiding surface, and an acting force generated between the main portion and the first guiding surface may be decomposed to generate a component force pointing to the first limiting section along the first limiting section. Under an action of the component force, the first limiting member is capable of retracting and the first elastic member is compressed until the main portion does not abut against the first guiding surface when the first fitting portion moves to a preset position. Under an action of a driving force of the first elastic member, a part of the first limiting member extends out of the second recess portion along the first through hole, and extends into the first fitting portion.

In a possible implementation, the first limiting member and the mounting bracket are integrally formed.

In this design, a quantity of components can be reduced. Because the first limiting member and the mounting bracket are integrally formed, components such as the first elastic member and the third limiting member may be omitted. In addition, a structure requirement for the first limiting member is relatively low, and a multi-section structure with different cross-sectional areas may not be required. This helps simplify structures of the mounting bracket and the wearable device, thereby reducing processing difficulty, simplifying processing and assembly steps, improving production efficiency, and better meeting an actual use requirement.

In a possible implementation, the first fitting portion is a groove, and an extension direction of the first limiting member is perpendicular to the thickness direction of the wearable device.

In this design, the main portion can be easily limited by the first limiting member.

In a possible implementation, the first recess portion is provided on a side wall of the second limiting member and extends in a radial direction of the second limiting member.

Through disposition of the first recess portion, stability of fitting between the second limiting member and the second fitting portion can be improved, and a possibility that the second limiting member is detached from the second fitting portion can be reduced, thereby improving mounting stability of the main portion.

In a possible implementation, a second elastic member is disposed between the second fitting portion and the main portion, and when the second fitting portion moves relative to the main portion, the second elastic member is capable of being deformed, and the second elastic member is configured to drive the second fitting portion to reset.

When the main portion is mounted or detached, the second fitting portion may be manually driven to move relative to the main portion. When the second fitting portion moves relative to the main portion, the second elastic member can be driven to be deformed, and a recovery force generated when the second elastic member is deformed can be used to drive the second fitting portion to reset, so that the second fitting portion better fits with the second limiting member, stability of fitting between the second fitting portion and the second limiting member can be improved, and a possibility that the second fitting portion releases fitting with the second limiting member due to an accidental touch is reduced.

In a possible implementation, the second fitting portion has a second guiding portion, the second guiding portion extends in a moving direction of the second fitting portion, and at least a part of the second elastic member is sleeved on the second guiding portion.

Through disposition of the second guiding portion, mounting stability of the second elastic member can be improved. The second guiding portion can further guide deformation of the second elastic member, to reduce a possibility that the second elastic member deviates in a deformation process, thereby helping improve movement stability of the second fitting portion.

In a possible implementation, the second fitting portion has a second guiding surface, and the second guiding surface is disposed on the protrusion portion and is configured to be in contact with the second limiting member.

When the main portion is mounted, the main portion may be placed into the mounting bracket in the mounting direction, the second guiding surface is in contact with the second limiting member, and an acting force generated between the second guiding surface and the second limiting member can be decomposed to form a component force in the radial direction of the second limiting member. The component force can be used to drive the second fitting portion to move in the radial direction of the second limiting member toward a direction away from the second limiting member. When the second fitting portion moves to a preset position, the second fitting portion can move under an action of a recovery force of the second elastic member and extend into the first recess portion.

In a possible implementation, a third guiding surface is disposed on the second limiting member, and the third guiding surface is configured to be in contact with the second guiding surface.

The third guiding surface may be an oblique surface, an arc-shaped surface, or the like. When the third guiding surface is in contact with the second fitting portion, the second limiting member may move along the third guiding surface, so that the second limiting member easily moves to a preset position.

In a possible implementation, the second fitting portion has a second through hole, and when the main portion is mounted on the mounting bracket, at least a part of the second limiting member is located in the second through hole.

The second through hole may also limit the second limiting member when the second fitting portion fits with the second limiting member, thereby improving stability of fitting between the second fitting portion and the second limiting member.

In a possible implementation, the protrusion portion is located on a side wall of the second through hole.

Through disposition of the second through hole and the protrusion portion, the second fitting portion can easily fit with the second limiting member.

In a possible implementation, a side that is of the main portion and that faces the second limiting member has a third recess portion, the third recess portion communicates with the second through hole, and when the main portion is mounted on the mounting bracket, a part of the second limiting member extends into the third recess portion.

Through disposition of the third recess portion, the second limiting member can be avoided, so that a thickness of the second fitting portion can be reduced. In addition, when a total thickness is calculated, a size of the part that is of the second limiting member and that extends into the third recess portion 14 may not be counted. Therefore, an overall thickness of the wearable device is reduced, and a miniaturization and lightening and thinning design of the wearable device is implemented, thereby better meeting an actual use requirement.

In a possible implementation, a fourth guiding surface is disposed on a side wall of the first recess portion, and the fourth guiding surface is disposed in parallel to the second guiding surface and is configured to abut against the second guiding surface.

Through disposition of the second guiding surface and the fourth guiding surface, a guiding function can be implemented in a process in which the second fitting portion fits with the second limiting member, so that the second limiting portion easily extends into the first recess portion, to improve fitting stability. In addition, both the second guiding surface and the fourth guiding surface are obliquely disposed. Therefore, this helps increase a contact area between the second guiding surface and the fourth guiding surface, thereby improving stability of fitting between the first fitting member and the second fitting member.

In a possible implementation, the main portion has a fourth limiting member, a fourth recess portion is disposed on the second fitting portion, and at least a part of the fourth limiting member extends into the fourth recess portion, to limit relative positions of the second fitting portion and the main portion.

Through disposition of the fourth limiting member and the fourth recess portion, movement of the second fitting portion may be limited through fitting between the fourth limiting member and the fourth recess portion, and a travel range of the second fitting portion during movement is limited, thereby reducing interference of the second fitting portion to an internal structure of the main portion or detaching of the second fitting portion from the main portion that is caused by excessive displacement.

In a possible implementation, an extending direction of the fourth limiting member is perpendicular to a moving direction of the second fitting portion.

The fourth limiting member may be disposed on a bottom wall of the main portion and extend in a thickness direction of the main portion. The second fitting portion may move in the width direction of the main portion. In this design, the second fitting portion can be better limited by the fourth limiting member.

In a possible implementation, the fourth limiting member includes a first body portion and a second body portion, the second body portion is located on a side that is of the first body portion and that is away from the main portion, a cross-sectional area of the second body portion is greater than a cross-sectional area of the first body portion, the fourth recess portion includes a first recess structure and a second recess structure that communicate with each other, the second recess structure is located on a side that is of the first recess structure and that is away from the main portion, and a cross-sectional area of the second recess structure is greater than a cross-sectional area of the first recess structure; and
the first body portion is located in the first recess structure, the second body portion is located in the second recess structure, and the cross-sectional area of the second body portion is greater than the cross-sectional area of the first recess structure.

In this design, the second fitting portion may be limited by the second body portion, thereby reducing a possibility that the second fitting portion 12 is detached in a direction away from the main portion.

In a possible implementation, the second fitting portion includes a pressing portion, and the pressing portion and the fourth recess portion are located on two sides of a second through hole of the second fitting portion in a moving direction of the second fitting portion.

Usually, a size of the second fitting portion in the moving direction of the second fitting portion is long. In a moving process, an end away from the pressing portion is prone to be inclined, for example, in the moving process, the end away from the pressing portion is inclined toward a side away from the main portion, which interferes with movement of the second fitting portion. Through setting of fitting between the second body portion and the second recess structure, an inclination possibility of the second fitting portion in the moving process can be reduced, so that movement of the second fitting portion is more stable. In a possible implementation, the main portion includes at least two second fitting portions, and the mounting bracket includes at least two second limiting members.

Through disposition of the at least two second fitting portions and the at least two second limiting members, mounting stability of the main portion and the fitting portion can be improved, and a possibility that the main portion is detached from the fitting portion is reduced, thereby better meeting an actual use requirement.

In a possible implementation, the main portion includes two second fitting portions, the second fitting portions are located on two opposite sides of the main portion in the width direction of the main portion, the mounting bracket includes two second limiting members, and the second limiting members are located on two opposite sides of the mounting bracket in a width direction of the mounting bracket; and
the first fitting portion is located on a side of the main portion in the length direction of the main portion, and the first limiting member is located on a side of the mounting bracket in a length direction of the mounting bracket.

The second fitting portions are disposed on two opposite sides of an end that is of the main portion and that is away from the first fitting portion, so that connection lines between the two second fitting portions and the first fitting portion enclose a triangle, thereby improving mounting stability of the main portion. In addition, during detaching, a user may press, by using an index finger and a thumb, the second fitting portions located on the two opposite sides of the main portion, so that the second fitting portions release fitting with the second limiting members, which is more convenient to operate and better meets an actual use requirement.

A second aspect of this application further provides an electronic device, mounted on a mounting bracket. The electronic device includes:
a first fitting portion, where the first fitting portion is disposed on a side wall of the electronic device and is configured to fit with a first limiting member of the mounting bracket; and
a second fitting portion, where the second fitting portion has a protrusion portion, and the second fitting portion is disposed on a bottom wall of the electronic device and is capable of moving in a length direction or a width direction of the electronic device, and is configured to fit with a second limiting member of the mounting bracket by using the protrusion portion, where
the electronic device is capable of being used as the main portion according to any one of the foregoing.

Through disposition of the first fitting portion and the second fitting portion, the electronic device can be easily mounted on the mounting bracket and detached from the mounting bracket.

In a possible implementation, the first fitting portion is a groove, and when the electronic device is mounted on the mounting bracket, at least a part of the first limiting member is capable of extending into the first fitting portion.

In this design, the first limiting member easily fits with the first fitting portion.

In a possible implementation, the second fitting portion is mounted on the electronic device by using a second elastic member.

The second elastic member can improve stability of fitting between the second fitting portion and the second limiting member, and implement automatic resetting of the second fitting portion.

In a possible implementation, the second fitting portion has a second through hole, and when the electronic device is mounted on the mounting bracket, at least a part of the second limiting member is located in the second through hole.

The second through hole can be used to limit the second limiting member during fitting, and improve stability of fitting between the second through hole and the second limiting member.

In a possible implementation, the electronic device has a fourth limiting member, the second fitting portion has a fourth recess portion, and at least a part of the fourth limiting member extends into the fourth recess portion;
the fourth limiting member includes a first body portion and a second body portion, the second body portion is located on a side that is of the first body portion and that is away from the main portion, a cross-sectional area of the second body portion is greater than a cross-sectional area of the first body portion, the fourth recess portion includes a first recess structure and a second recess structure that communicate with each other, the second recess structure is located on a side that is of the first recess structure and that is away from the main portion, and a cross-sectional area of the second recess structure is greater than a cross-sectional area of the first recess structure; and
the first body portion is located in the first recess structure, the second body portion is located in the second recess structure, and the cross-sectional area of the second body portion is greater than the cross-sectional area of the first recess structure.

In this design, movement of the second fitting portion can be limited, thereby reducing a possibility that the second fitting portion is inclined in a movement process.

In a possible implementation, the electronic device includes at least two second fitting portions, and the second fitting portions are symmetrically distributed in the length direction or the width direction of the electronic device.

Through disposition of the plurality of second fitting portions, mounting stability of the electronic device can be improved.

A third aspect of this application further provides a mounting bracket for mounting of a main portion. The mounting bracket includes:
a first limiting member, where the first limiting member is located on a side wall of the mounting bracket and is configured to fit with a first fitting portion of the main portion; and
a second limiting member, where the second limiting member is located on a bottom wall of the mounting bracket and is configured to fit with a second fitting portion of the main portion, where
at least a part of the first limiting member is capable of extending into the first fitting portion, the second limiting member has a first recess portion, and the first recess portion is configured to accommodate a protrusion portion of the second fitting portion; and
the mounting bracket is used in the wearable device according to any one of the foregoing.

In this design, mounting and detaching steps of the main portion can be simplified, and an actual use requirement can be better met.

In a possible implementation, the first limiting member is capable of moving relative to the mounting bracket.

In this design, the first limiting member can easily fit with and release fitting with the first fitting portion.

In a possible implementation, the first limiting member and the mounting bracket are integrally formed.

In this design, a quantity of components can be reduced, and assembly difficulty can be reduced.

In a possible implementation, the mounting bracket includes at least two second limiting members, and the second limiting members are spaced apart in a length direction or a width direction of the mounting bracket.

Through disposition of the plurality of second limiting members, stability present when the mounting bracket is used for mounting of the main portion can be improved, and an actual use requirement can be better met.

This application relates to a wearable device, including a main portion and a mounting bracket. The main portion has a first fitting portion and a second fitting portion. The mounting bracket has a first limiting member configured to fit with the first fitting portion and a second limiting member configured to fit with the second fitting portion. One of the second limiting member and the second fitting portion has a recess, the other has a protrusion. The second fitting portion is capable of moving relative to the main portion in a length direction or a width direction of the main portion. When the protrusion extends into the recess and the first fitting portion fits with the first limiting member, the main portion is mounted on the mounting bracket. When the protrusion is detached from the recess, the main portion can be detached from the mounting bracket. In this design, the main portion is directly driven after the second fitting portion is driven to be unlocked, so that fitting between the first limiting member and the second fitting portion can be released, and mounting and detaching processes of the main portion are very convenient.

It should be understood that the foregoing general descriptions and the following detailed descriptions are merely examples, and cannot limit this application.

### BRIEF DESCRIPTION OF DRAWINGS

FIG. 1 is a diagram of a wearable device according to this application;
FIG. 2 is a cross-sectional view of a first embodiment of a wearable device according to this application;
FIG. 3 is a partially enlarged diagram of a position I in FIG. 2;
FIG. 4 is a diagram of a first embodiment of a mounting bracket according to this application;
FIG. 5 is a partially exploded view of FIG. 4;
FIG. 6 is a partially enlarged diagram of a position II in FIG. 4;
FIG. 7 is a diagram of FIG. 5 from another angle of view;
FIG. 8 is a diagram of a second embodiment of a mounting bracket according to this application;
FIG. 9 is a diagram of a second embodiment of a wearable device according to this application;
FIG. 10 is a partially enlarged diagram of a position IV in FIG. 9;
FIG. 11 is a diagram of fitting between a first embodiment of a second fitting portion and a second limiting member according to this application;
FIG. 12 is a partially enlarged diagram of a position V in FIG. 11;
FIG. 13 is a partially exploded view of a main portion according to this application;
FIG. 14 is a partially enlarged diagram of a position VI in FIG. 13;
FIG. 15 is an exploded view of a main portion according to this application;
FIG. 16 is a partially enlarged diagram of a position III in FIG. 4;
FIG. 17 is a partial diagram of a main portion according to this application;
FIG. 18 is a diagram of fitting between a second embodiment of a second fitting portion and a second limiting member according to this application;
FIG. 19 is a partially enlarged diagram of a position VII in FIG. 18;
FIG. 20 is a diagram of a structure of a second fitting portion according to this application; and
FIG. 21 is a diagram in which a wearable device has a foldable screen according to this application.

Reference numerals:
1: main portion; 11: first fitting portion; 12: second fitting portion; 121: second guiding surface; 122: pressing portion; 123: second through hole; 123a: protrusion portion; 124: fourth recess portion; 124a: first recess structure; 124b: second recess structure; 125: second guiding portion; 13: fourth limiting member; 131: first body portion; 132: second body portion; 14: third recess portion; 15: second elastic member; 16: bottom housing; 2: wearing portion; 21: mounting bracket; 211: first limiting member; 211a: first limiting section; 211b: second limiting section; 211c: first guiding surface; 212: second limiting member; 212a: first recess portion; 212b: third guiding surface; 212c: fourth guiding surface; 213: second recess portion; 213a: first guiding portion; 214: third limiting member; 214a: first through hole; 215: first elastic member; 22: wearing member; 3: mounting member.

The accompanying drawings herein are incorporated into this specification and constitute a part of this specification, to show embodiments in accordance with this application, and are used together with this specification to explain the principle of this application.

### DESCRIPTION OF EMBODIMENTS

To better understand technical solutions of this application, the following describes embodiments of this application in detail with reference to the accompanying drawings.

With development of technologies, wearable devices such as smartwatches are increasingly widely used. Usually, the smartwatch includes a watch body and a watch band mounted on the watch body. The watch band is configured to be worn on a wrist of a user. A display may be disposed on the watch body, and is configured to display time and other related information, for example, a user interface of an application. Usually, the watch body is fastened to the watch band, which makes it difficult for detaching the watch body from the watch band. Detaching needs to be completed by using a professional tool or by a professional. In addition, this design is inconvenient for use. A charging interface of the smartwatch needs to avoid a connection position of the watch band. In addition, during design, whether the smartwatch can be placed stably needs to be considered, to make the smartwatch be connected to a connection cable, for example, a power cable, when the smartwatch is placed stably. A position of a connection port, for example, the charging interface, is difficult to design. This does not meet an actual use requirement.

In a related technology, a side of the watch body has a fastener, and the other side has a cam. During detaching, fitting between the fastener and the watch band needs to be first released, then the watch body is erected, and after that, the watch body is rotated. After the watch body rotates for a specific angle, the cam can release fitting with the watch band. During mounting, the watch body needs to be first vertically placed on the watch band, so that the cam extends into a fitting portion of the watch band, then the watch body is rotated, so that an end that is of the watch body and that has the cam is locked with the fitting portion of the watch band, and after that, the watch body is driven to be horizontally placed on the watch band and the fastener is locked with the watch band. Mounting and detaching of the watch body are very complicated, which is very inconvenient to operate.

In view of this, embodiments of this application provide a wearable device, to resolve a problem of inconvenient mounting and detaching between a wearing portion and a main portion of the wearable device.

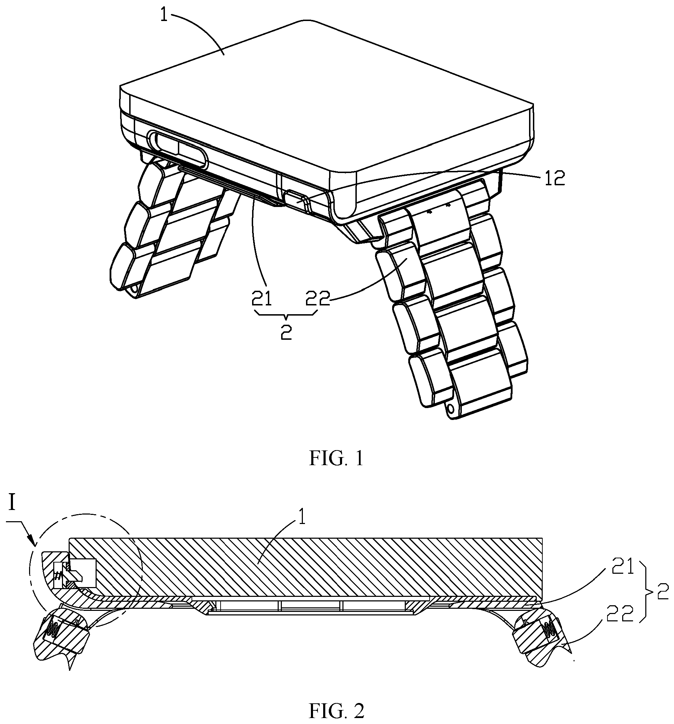

As shown in FIG. 1, embodiments of this application provide a wearable device. The wearable device includes a main portion 1 and a wearing portion 2, and the main portion 1 is detachably mounted on the wearing portion 2. The wearing portion 2 includes a mounting bracket 21 and at least one wearing member 22. The wearing member 22 may be securely mounted on the mounting bracket 21, or may be detachably mounted on the mounting bracket 21. The main portion 1 is mounted on the mounting bracket 21. The wearing member 22 is configured to enable the wearable device to be worn by a user. The wearable device may be a device, for example, a watch or a smartwatch. In this case, the main portion 1 is a watch body, and components such as a watch face and a display may be disposed on the main portion 1 and are configured to display information such as time or a user interface of another application. The wearing member 22 may be a watch band or another structure, and may be worn at a position, for example, a wrist of the user.

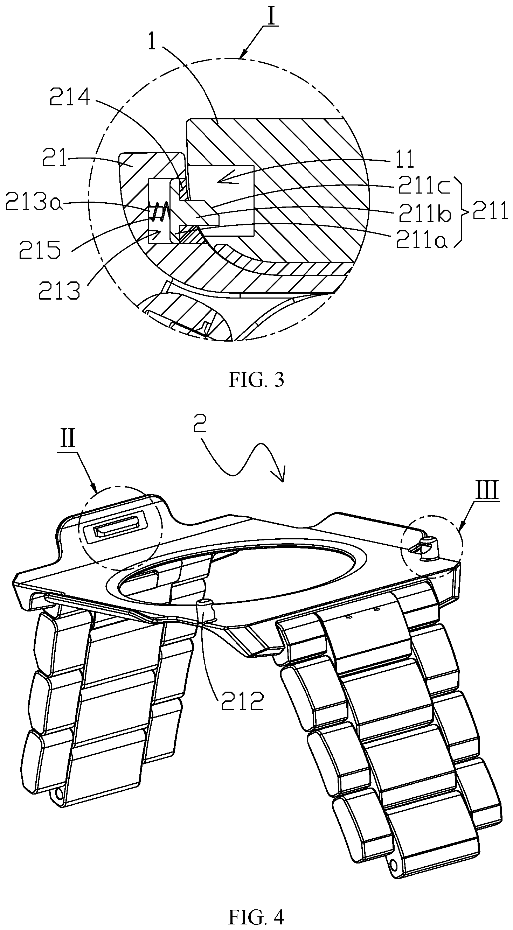

As shown in FIG. 2 and FIG. 3, in a possible implementation, a first limiting member 211 is disposed on the mounting bracket 21, and the first limiting member 211 protrudes relative to a surface on which the first limiting member 211 is located. A first fitting portion 11 is disposed on the main portion 1, and the first fitting portion 11 may be a recess structure, for example, a hole or a groove. When the main portion 1 needs to be mounted on the mounting bracket 21, the first limiting member 211 is capable of extending into the first fitting portion 11 of the main portion 1, to limit a relative position of the main portion 1 relative to the mounting bracket 21. As shown in FIG. 4, the mounting bracket 21 further includes a second limiting member 212, and the second limiting member 212 and the first limiting member 211 are located on different surfaces of the mounting bracket 21. As shown in FIG. 1, a second fitting portion 12 is disposed on the main portion 1, and the second fitting portion 12 is capable of moving relative to the main portion 1. When the second fitting portion 12 moves relative to the main portion 1, a protrusion is capable of extending into or being detached from a recess. When the protrusion extends into the recess and the first fitting portion 11 fits with the first limiting member 211, the main portion 1 is mounted on the mounting bracket 21. When the protrusion is detached from the recess, the second fitting portion 12 releases fitting with the second limiting member 212. In this case, the main portion may be driven to release fitting between the main portion 1 and the mounting bracket 21.

Specifically, the second limiting member 211 has a first recess portion 212a, and the second fitting portion 12 has a protrusion portion 123a. When the second fitting portion 12 moves relative to the main portion 1, the protrusion portion 123a is capable of extending into or being detached from the first recess portion 212a. The first limiting member 211 is located on a side wall of the mounting bracket 21 and protrudes relative to the side wall of the mounting bracket 21, and is configured to limit relative positions of the main portion 1 and the mounting bracket 21 in a thickness direction of the wearable device. The second limiting member 212 is disposed on a bottom wall of the mounting bracket 21 and extends in the thickness direction of the wearable device, and is configured to limit relative positions of the main portion 1 and the mounting bracket 21 in a length direction and/or a width direction of the wearable device.

In the solution provided in embodiments of this application, detachable mounting between the main portion 1 and the wearing portion 2 is implemented through fitting between the limiting member and the fitting portion. This is easy to operate, and the main portion 1 can also be completely detached from the wearing portion 2, thereby better meeting an actual use requirement. When the wearable device is damaged, the wearing portion 2 may be separately replaced or the main portion 1 may be detached according to a requirement, to maintain the main portion 1 and reduce interference of the wearing portion 2 in a maintenance process, thereby helping reduce maintenance difficulty of the wearable device. During detaching, the second fitting portion 12 may be driven to release fitting between the second fitting portion 12 and the second limiting member 212, and the main portion 1 may be directly driven to move relative to the mounting bracket 21, so that the first limiting portion 211 can release fitting with the first fitting portion 11, to complete detaching, which is very convenient for use.

A smartwatch is used as an example. In a solution in which a watch body cannot be detached from a watch band, because a deformation range of the watch band is limited, it is difficult to place the watch body horizontally at a position during charging of the smartwatch, for example, on a desktop. When a charging interface is designed, a status of the main portion 1 needs to be considered. This increases design difficulty. However, in the solution provided in embodiments of this application, the main portion 1 may be detached from the wearing portion 2 during charging, so that the main portion 1 is placed horizontally at a position, for example, on a desktop. In this way, placement is stable, and a posture of the main portion 1 is relatively fixed when the main portion 1 is placed. This can facilitate a design of the charging interface or another structure, and help reduce design difficulty.

As shown in FIG. 3, in a possible implementation, the first limiting member 211 is capable of moving relative to the mounting bracket 21, so that the first limiting member 211 is capable of extending into or being detached from the first fitting portion 11 of the main portion 1. Specifically, a second recess portion 213 may be provided on the side wall of the mounting bracket 21. The second recess portion 213 may be a hole, or may be a recess structure, for example, a groove. At least a part of the first limiting member 211 is located in the second recess portion 213. When the first limiting member 211 moves relative to the mounting bracket 21, a part of the first limiting member 211 is capable of extending out or retracting along an opening of the second recess portion 213. When the first limiting member 211 extends out, the first limiting member 211 is capable of extending into the first fitting portion 11 and fitting with the first fitting portion 11. When the main portion 1 is mounted, the first limiting member 211 may retract to avoid the main portion 1. When the main portion 1 moves to a preset position, the first limiting member 211 extends out and fits with the second recess portion 213, so that the main portion 1 can be mounted on the mounting bracket 21. The first limiting member 211 may be manually controlled, through disposition of a driving mechanism, to retract, and the disposition of the driving mechanism includes but is not limited to directly disposing a driving structure that protrudes relative to a surface of the main portion 1. The user may directly drive the first limiting member 211 in a manner of pulling or the like, or the main portion 1 may abut against the first limiting member 211 in a mounting process, and the first limiting member 211 is driven to retract. When the main portion 1 moves to the preset position, the main portion 1 does not abut against the first limiting member 211, so that the first limiting member 211 is capable of extending out and extending into the first fitting portion 11.

The second recess portion 213 can guide movement of the first limiting member 211, to improve movement stability of the first limiting member 211, and help the first limiting member 211 fit with or release fitting with the first fitting portion 11.

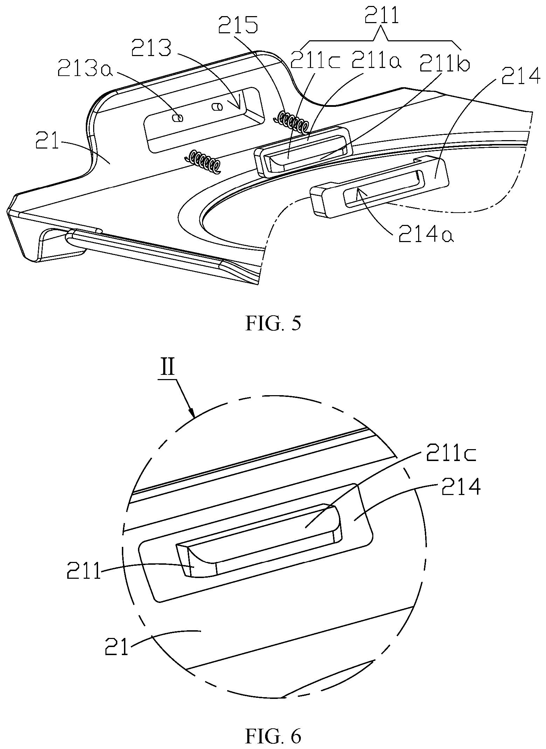

As shown in FIG. 3, FIG. 4, FIG. 5, FIG. 6, and FIG. 7, in a possible implementation, the first limiting member 211 includes a first limiting section 211a and a second limiting section 211b. A size of the first limiting section 211a in a length direction and/or a width direction is greater than a size of the second limiting section 211b in a corresponding direction, that is, in the thickness direction and/or the width direction of the wearable device, a cross-sectional area of the first limiting section 211a is greater than a cross-sectional area of the second limiting section 211b. The second limiting section 211b is located on a side that is of the first limiting section 211a and that is away from a bottom wall of the second recess portion 213. A third limiting member 214 is disposed at an opening position of the second recess portion 213, and a first through hole 214a is provided on the third limiting member 214. At least a part of the third limiting member 214 may extend into the second recess portion 213, the third limiting member 214 is relatively fastened to a side wall of the second recess portion 213, and the first through hole 214a communicates with the inside of the second recess portion 213. A width of the first limiting section 211a is greater than a hole diameter of the first through hole 214a, a width of the second limiting section 211b is not greater than the hole diameter of the first through hole 214a, at least a part of the second limiting section 211b is capable of extending out along the first through hole 214a, at least a part of the first limiting section 211a abuts against a side that is of the third limiting member 214 and that faces the second recess portion 213, and the first limiting section 211a cannot extend out along the first through hole 214a. The third limiting member 214 may be relatively securely mounted on the mounting bracket 21 by using a mounting member 3, and the mounting member 3 may be a component, for example, a screw.

In this design, the first limiting member 211 can be limited by the third limiting member 214, thereby reducing a possibility that the first limiting member 211 is detached from the second recess portion 213. When the first limiting member 211 fits with the first fitting portion 11, at least a part of the second limiting section 211b extends out along the first through hole 214a to extend into the first fitting portion 11.

As shown in FIG. 3, in a possible implementation, a first elastic member 215 is disposed on a side that is of the first limiting member 211 and that is away from the second limiting member 212. The first elastic member 215 is located between the first limiting member 211 and the side wall of the second recess portion 213. The first elastic member 215 may be relatively fastened to the first limiting member 211 and the side wall of the second recess portion 213; or may abut against the first limiting member 211 and the side wall of the second recess portion 213; or the like. When the first limiting member 211 retracts, the first elastic member 215 is compressed. When the first limiting member 211 extends out, with help of a recovery force of the first elastic member 215, the first limiting member 211 may be driven, by using the recovery force generated when the first elastic member 215 is compressed, to extend out along the first through hole 214a.

Through disposition of the first elastic member 215, movement of the first limiting member 211 can be controlled, so that the first limiting member 211 is driven to extend out along the first through hole 214a and fit with the first fitting portion 11. When the first limiting member 211 fits with the first fitting portion 11, the first elastic member 215 can reduce a possibility that the first limiting member 211 retracts due to an accidental touch or the like, and reduce a possibility that the first limiting member 211 is detached from the first fitting portion 11, thereby improving stability of the first limiting member 211 and the first fitting portion 11.

As shown in FIG. 3, in a possible implementation, a first guiding portion 213a is disposed on the bottom wall of the second recess portion 213, the first guiding portion 213a protrudes relative to the bottom wall of the second recess portion 213, and at least a part of the first elastic member 215 is sleeved on the first guiding portion 213a.

The at least a part of the first elastic member 215 is sleeved on the first guiding portion 213a, so that mounting stability of the first elastic member 215 is improved, and when the first elastic member 215 is deformed, the first elastic member 215 can be further guided to shrink or extend, thereby improving stability present when the first elastic member 215 is deformed, and improving movement stability of the first limiting member 211.

In a possible implementation, the first elastic member 215 may be a common elastic member, for example, a spring or a clamping spring.

As shown in FIG. 3, in a possible implementation, a first guiding surface 211c is disposed on the second limiting section 211b, and the first guiding surface 211c is located at an end that is of the second limiting section 211b and that is away from the first limiting section 211a, and is inclined in a mounting direction of the main portion 1, that is, in a direction away from the first limiting section 211a, a cross-sectional area of the second limiting section 211b gradually decreases. The first guiding surface 211c may be an oblique surface, an arc-shaped surface, or another structure. The first guiding surface 211c is configured to be in contact with the main portion 1 in a process of mounting the main portion 1.

Through disposition of the first guiding surface 211c, the first limiting member 211 can easily fit with the first fitting portion 11, and the main portion 1 can be easily mounted on the mounting bracket 21. During mounting, the main portion 1 is placed into the mounting bracket 21 in the mounting direction. In a placement process, the main portion 1 is in contact with the first guiding surface 211c, and an acting force generated between the main portion 1 and the first guiding surface 211c may be decomposed to generate a component force pointing to the first limiting section 211a along the first limiting section 211a. Under an action of the component force, the first limiting member 211 is capable of retracting and the first elastic member 215 is compressed until the main portion 1 does not abut against the first guiding surface 211c when the first fitting portion 11 moves to a preset position. Under an action of a driving force of the first elastic member 215, a part of the first limiting member 211 extends out of the second recess portion 213 along the first through hole 214a, and extends into the first fitting portion 11.

As shown in FIG. 3, in a possible implementation, the first limiting member 211 is disposed on the side wall of the mounting bracket 21. The first fitting portion 11 is a groove and is disposed on a side wall of the main portion 1. The mounting direction of the main portion 1 is parallel to a thickness direction of the main portion 1. When the main portion 1 is mounted, the main portion 1 may be pressed in the mounting direction, so that the first limiting member 211 fits with the first fitting portion 11.

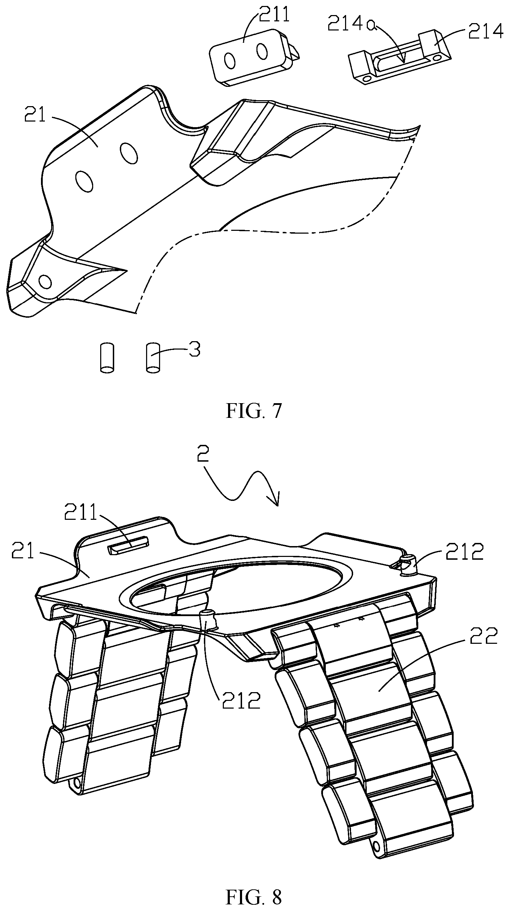

As shown in FIG. 8, FIG. 9, and FIG. 10, in a possible implementation, the first limiting member 211 and the mounting bracket 21 may be integrally formed, that is, the first limiting member 211 is securely disposed on the mounting bracket 21. During mounting, the main portion 1 is first obliquely placed on the mounting bracket 21, and the main portion 1 and the mounting bracket 21 move relative to each other, so that the first limiting member 211 extends into the first fitting portion 11, and then the main portion 1 is gradually laid flat, and the second limiting member 212 fits with the second fitting portion 12. During detaching, the second fitting portion 12 may be first driven to move relative to the main portion 1, so that the second fitting portion 12 releases fitting with the second limiting member 212, and then the main portion 1 is inclined relative to the mounting bracket 21, so that the main portion 1 can move in a direction away from the first limiting member 211. In this way, the first fitting portion 11 releases fitting with the first limiting member 211, and detaching is completed.

In this design, a quantity of components can be reduced. Because the first limiting member 211 and the mounting bracket 21 are integrally formed, components such as the first elastic member 215 and the third limiting member 214 may be omitted. In addition, a structure requirement for the first limiting member 211 is relatively low, and a multi-section structure with different cross-sectional areas may not be required. This helps simplify structures of the mounting bracket 21 and the wearable device, thereby reducing processing difficulty, simplifying processing and assembly steps, improving production efficiency, and better meeting an actual use requirement.

In a possible implementation, the first fitting portion 11 is a groove, and an extension direction of the first limiting member 211 is perpendicular to the thickness direction of the wearable device.

In this design, the main portion 1 can be easily limited by the first limiting member 211.

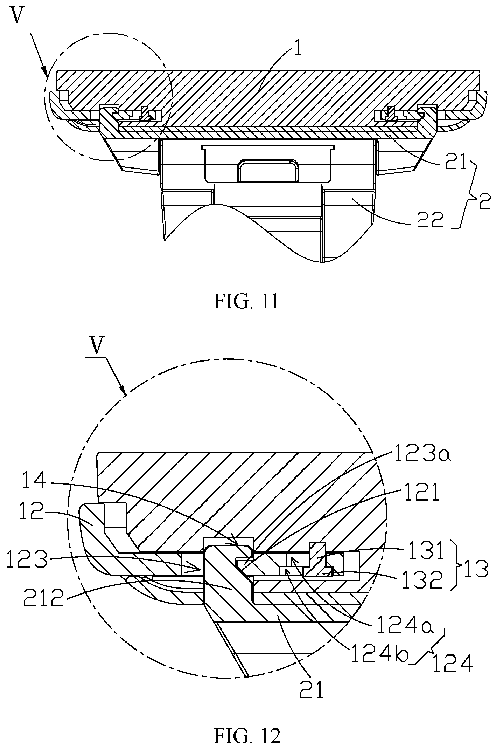

As shown in FIG. 11, FIG. 12, and FIG. 16, in a possible implementation, the first recess portion 212a is provided on a side wall of the second limiting member 212 and extends in a radial direction of the second limiting member 212. In this design, when the first limiting member 211 fits with the second fitting portion 12, limiting can be performed in the length direction and/or the width direction of the wearable device, and the relative positions of the main portion 1 and the mounting bracket 21 can also be limited in the height direction, thereby better meeting an actual use requirement.

Through disposition of the first recess portion 212a, stability of fitting between the second limiting member 212 and the second fitting portion 12 can be improved, and a possibility that the second limiting member 212 is detached from the second fitting portion 12 can be reduced, thereby improving mounting stability of the main portion 1.

When the main portion 1 is detached, the second fitting portion 12 may be first moved, to release fitting between the second fitting portion 12 and the second limiting portion, and then the main portion 1 is moved, to release fitting between the first fitting portion 11 and the first limiting member 211, thereby completing detaching of the main portion 1. During mounting, the first fitting portion 11 may fit with the first limiting member 211 in a pressing manner, and the second fitting portion 12 is driven to move, so that the second fitting portion 12 fits with the second limiting member 212, to complete mounting.

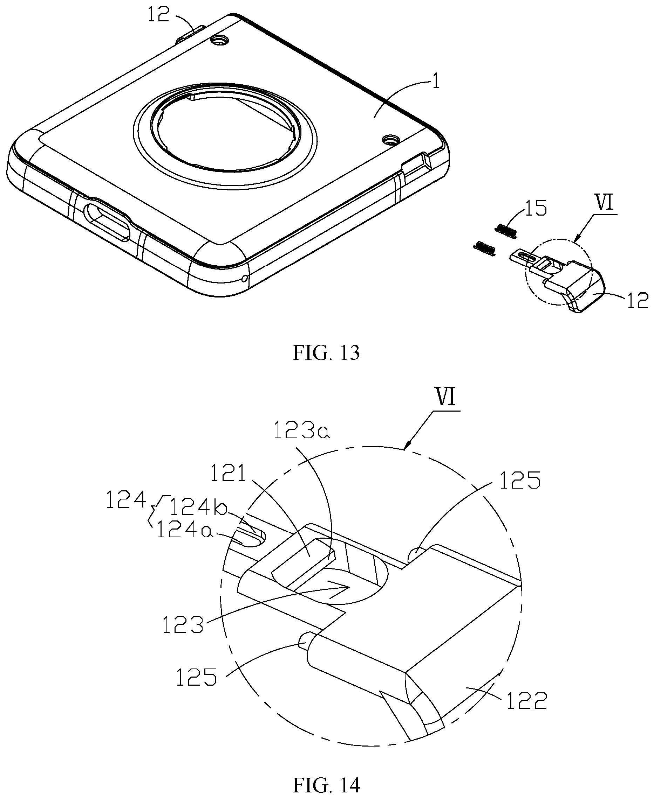

As shown in FIG. 13, FIG. 14, FIG. 15, FIG. 16, and FIG. 17, in a possible implementation, a second elastic member 15 is disposed between the second fitting portion 12 and the main portion 1. The second elastic member 15 may be relatively fastened to the main portion 1 and the second fitting portion 12; or may abut against the main portion 1 and the second fitting portion 12; or the like. The second elastic member 15 may be configured to drive the second fitting portion 12 to reset. An avoidance structure may be disposed on a bottom housing 16, to avoid mounting positions of the main portion 1 and the wearing portion 2.

When the main portion 1 is mounted or detached, the second fitting portion 12 may be manually driven to move relative to the main portion 1. When the second fitting portion 12 moves relative to the main portion 1, the second elastic member 15 can be driven to be deformed, and a recovery force generated when the second elastic member 15 is deformed can be used to drive the second fitting portion 12 to reset, so that the second fitting portion 12 better fits with the second limiting member 212, stability of fitting between the second fitting portion 12 and the second limiting member 212 can be improved, and a possibility that the second fitting portion 12 releases fitting with the second limiting member 212 due to an accidental touch is reduced.

As shown in FIG. 14, in a possible implementation, the second fitting portion 12 has a second guiding portion 125, the second guiding portion 125 extends in a moving direction of the second fitting portion 12, and at least a part of the second elastic member 15 is sleeved on the second guiding portion 125.

Through disposition of the second guiding portion 125, mounting stability of the second elastic member 15 can be improved. The second guiding portion 125 can further guide deformation of the second elastic member 15, to reduce a possibility that the second elastic member 15 deviates in a deformation process, thereby helping improve movement stability of the second fitting portion 12.

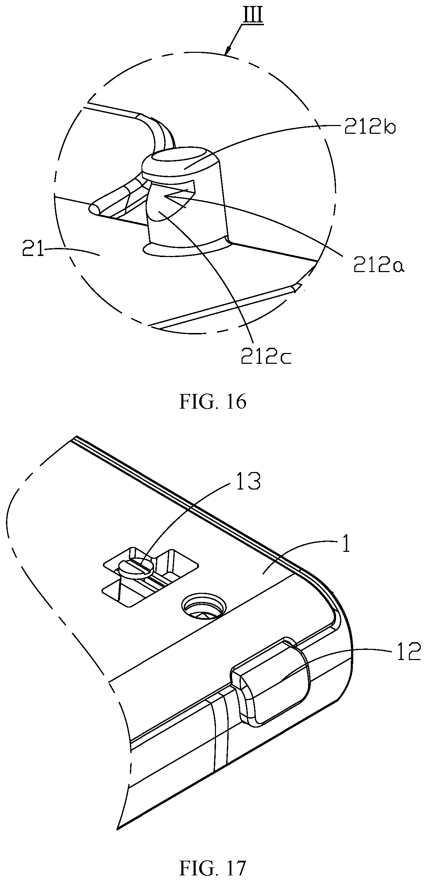

As shown in FIG. 16, in a possible implementation, a second guiding surface 121 is disposed on the second fitting portion 12, and the second guiding surface 121 is configured to be in contact with the second limiting member 212. The second guiding surface 121 is inclined in a direction opposite to the mounting direction of the main portion 1, that is, the second guiding surface 121 is inclined in a direction away from the mounting bracket 21. The second guiding surface 121 may be an oblique surface, an arc-shaped surface, or another structure. The second limiting member 212 may be disposed on the bottom wall of the mounting bracket 21 and protrudes in a direction away from the bottom wall. The first recess portion 212a is provided on the side wall of the second limiting member 212 and is recessed in the radial direction of the second limiting member 212. When the main portion 1 is mounted, the main portion 1 may be placed into the mounting bracket 21 in the mounting direction, the second guiding surface 121 is in contact with the second limiting member 212, and an acting force generated between the second guiding surface 121 and the second limiting member 212 can be decomposed to form a component force in the radial direction of the second limiting member 212. The component force can be used to drive the second fitting portion 12 to move in the radial direction of the second limiting member 212 toward a direction away from the second limiting member 212. When the second fitting portion 12 moves to a preset position, the second fitting portion 12 can move under an action of a recovery force of the second elastic member 15 and extend into the first recess portion 212a.

As shown in FIG. 12 and FIG. 16, in a possible implementation, a third guiding surface 212b is disposed on the second limiting member 212, the third guiding surface 212b is configured to be in contact with the second guiding surface 121 of the second fitting portion 12, and the third guiding surface 212b may be an oblique surface, an arc-shaped surface, or the like. When the third guiding surface 212b is in contact with the second fitting portion 12, the second limiting member 212 may move along the third guiding surface 212b, so that the second limiting member 212 easily moves to a preset position.

In a possible implementation, the second fitting portion 12 may move in a length direction or a width direction of the main portion 1. The second fitting portion 12 may include a pressing portion 122. The pressing portion 122 may be used as a button structure for the user to press, to drive the second fitting portion 12 to move relative to the main portion 1. A second through hole 123 is provided on the second fitting portion 12, the protrusion portion 123a is provided on a side wall of the second through hole 123, and the second guiding surface 121 is disposed on the protrusion portion 123a. When the second fitting portion 12 fits with the second limiting member 212, at least a part of the protrusion portion 123a is capable of extending into the first recess portion 212a, so that the second fitting portion 12 fits with the second limiting member 212.

Through disposition of the second through hole 123 and the protrusion portion 123a, the second fitting portion 12 can easily fit with the second limiting member 212. In addition, the second through hole 123 may also limit the second limiting member 212 when the second fitting portion 12 fits with the second limiting member 212, thereby improving stability of fitting between the second fitting portion 12 and the second limiting member 212. During detaching, the second fitting portion 12 may be first driven to move, so that the protrusion portion 123a is detached from the first recess portion 212a, and then the main portion 1 is moved, so that the second limiting member 212 is detached from the second through hole 123, and the second fitting portion 12 releases fitting with the second limiting member 212.

As shown in FIG. 16, in a possible implementation, a fourth guiding surface 212c is disposed on a side wall of the first recess portion 212a, and the fourth guiding surface 212c is disposed in parallel with the second guiding surface 121 and is configured to abut against the second guiding surface 121.

Through disposition of the second guiding surface 121 and the fourth guiding surface 212c, a guiding function can be implemented in a process in which the second fitting portion 12 fits with the second limiting member 212, so that the second limiting portion easily extends into the first recess portion 212a, to improve fitting stability. In addition, both the second guiding surface 121 and the fourth guiding surface 212c are obliquely disposed. Therefore, this helps increase a contact area between the second guiding surface 121 and the fourth guiding surface 212c, thereby improving stability of fitting between the first fitting member and the second fitting member.

As shown in FIG. 12, in a possible implementation, a fourth limiting member 13 may be disposed on the main portion 1, a fourth recess portion 124 is provided on the second fitting portion 12, at least a part of the fourth limiting member 13 extends into the fourth recess portion 124, and there is an included angle between an extension direction of the fourth limiting member 13 and the moving direction of the second fitting portion 12.

Through disposition of the fourth limiting member 13 and the fourth recess portion 124, movement of the second fitting portion 12 may be limited through fitting between the fourth limiting member 13 and the fourth recess portion 124, and a travel range of the second fitting portion 12 during movement is limited, thereby reducing interference of the second fitting portion 12 to an internal structure of the main portion 1 or detaching of the second fitting portion 12 from the main portion 1 that is caused by excessive displacement.

In a possible implementation, an end of the second elastic member 15 is fastened to the second fitting portion 12, and the other end is fastened to the main portion 1, so that the second fitting portion 12 can move relative to the main portion 1, and a possibility that the second fitting portion 12 is detached from the main portion 1 can also be reduced.

In a possible implementation, the extension direction of the fourth limiting member 13 may be perpendicular to the moving direction of the second fitting portion 12.

The fourth limiting member 13 may be disposed on a bottom wall of the main portion 1 and extend in the thickness direction of the main portion 1. The second fitting portion 12 may move in the width direction of the main portion 1. In this design, the second fitting portion 12 can be better limited by the fourth limiting member 13.

As shown in FIG. 12, in a possible implementation, the fourth limiting member 13 includes a first body portion 131 and a second body portion 132, the second body portion 132 is located on a side that is of the first body portion 131 and that is away from the main portion 1, and a cross-sectional area of the second body portion 132 is greater than a cross-sectional area of the first body portion 131. The fourth recess portion 124 includes a first recess structure 124a and a second recess structure 124b that communicate with each other, the second recess structure 124b is located on a side that is of the first recess structure 124a and that is away from the main portion 1, and a cross-sectional area of the second recess structure 124b is greater than a cross-sectional area of the first recess structure 124a. The first body portion 131 is located in the first recess structure 124a, and the second body portion 132 is located in the second recess structure 124b. In addition, the cross-sectional area of the second body portion 132 is greater than the cross-sectional area of the first recess structure 124a, that is, the second body portion 132 cannot extend into the first recess structure 124a.

In this design, the second fitting portion 12 may be limited by the second body portion 132, thereby reducing a possibility that the second fitting portion 12 is detached in a direction away from the main portion 1.

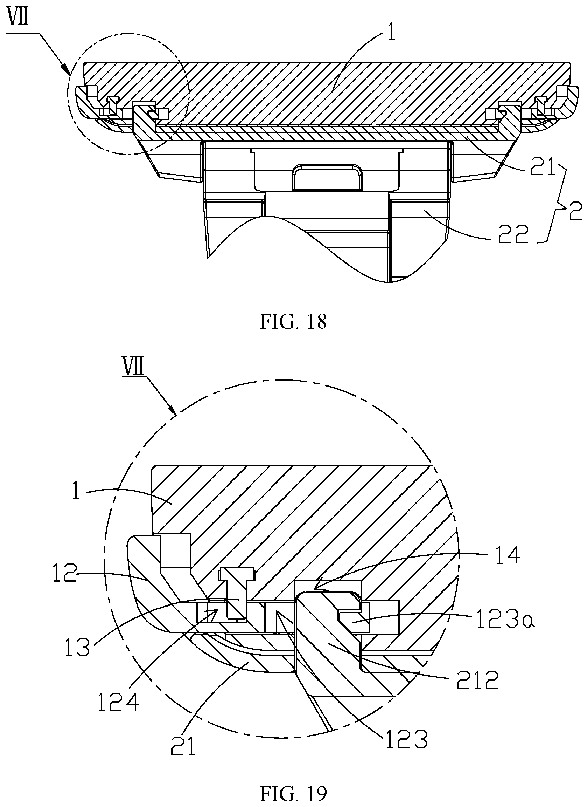

As shown in FIG. 18, FIG. 19, and FIG. 20, in a possible implementation, the fourth recess portion 124 and the second through hole 123 may be successively disposed in the moving direction of the second fitting portion 12.

In this design, a width of the second fitting portion 12 may be reduced, thereby helping reduce a size of the second fitting portion 12, reducing space occupied by the second fitting portion 12 in the main portion 1, reducing a possibility of interference of the second fitting member to another component in the main portion 1, and better meeting an actual use requirement.

As shown in FIG. 12, in a possible implementation, in a possible implementation, the fourth recess portion 124 and the pressing portion 122 are located on two sides of the second through hole 123 of the second fitting portion 12 in the moving direction of the second fitting portion 12, that is, the fourth recess portion 124 is located on a side that is of the second through hole 123 and that is away from the pressing portion 122.

Usually, a size of the second fitting portion 12 in the moving direction of the second fitting portion 12 is long. In a moving process, an end away from the pressing portion 122 is prone to be inclined, for example, in the moving process, the end away from the pressing portion 122 is inclined toward a side away from the main portion 1, which interferes with movement of the second fitting portion 12. Through setting of fitting between the second body portion 132 and the second recess structure 124b, an inclination possibility of the second fitting portion 12 in the moving process can be reduced, so that movement of the second fitting portion 12 is more stable.

As shown in FIG. 12, in a possible implementation, a third recess portion 14 is disposed on a side that is of the main portion 1 and that faces the second fitting portion 12, a side that is of the third recess portion 14 and that is away from the second fitting portion 12 is recessed, and the third fitting portion can communicate with the second through hole 123. When the second fitting portion 12 fits with the second limiting member 212, a part of the second limiting member 212 is capable of extending into the third recess portion 14 through the second through hole 123.

Through disposition of the third recess portion 14, the second limiting member 212 can be avoided, so that a thickness of the second fitting portion 12 can be reduced. In addition, when a total thickness is calculated, a size of the part that is of the second limiting member 212 and that extends into the third recess portion 14 may not be counted. Therefore, an overall thickness of the wearable device is reduced, and a miniaturization and lightening and thinning design of the wearable device is implemented, thereby better meeting an actual use requirement.

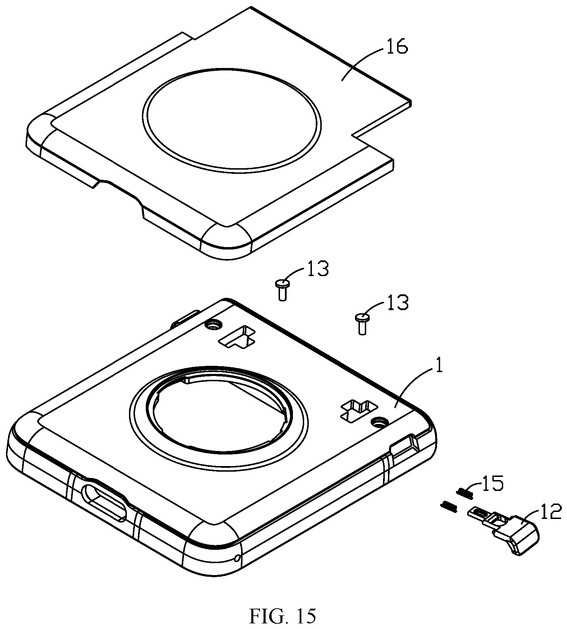

As shown in FIG. 15, in a possible implementation, at least two second fitting portions 12 may be disposed on the main portion 1, and at least two second limiting members 212 are disposed on the mounting bracket 21.

Through disposition of the at least two second fitting portions 12 and the at least two second limiting members 212, mounting stability of the main portion 1 and the fitting portion can be improved, and a possibility that the main portion 1 is detached from the fitting portion is reduced, thereby better meeting an actual use requirement.

As shown in FIG. 1, in a possible implementation, the wearing portion 2 includes two wearing members 22, and the wearing members 22 are located on two opposite sides of the mounting bracket 21. For example, when the main portion 1 is mounted on the mounting bracket 21, the wearing members 22 are located on two sides of the main portion 1 in the length direction. The first limiting member 211 and the first fitting portion 11 may be located on a same side of the main portion 1 in the length direction of the main portion 1, and the second limiting member 212 and the second limiting portion may be located at an end that is of the main portion 1 and that is away from the first limiting member 211 and the first fitting portion 11.

In this design, stability of mounting the main portion 1 on the mounting bracket 21 can be improved.

As shown in FIG. 13, in a possible implementation, two second fitting portions 12 are disposed on the main portion 1, two second limiting members 212 are disposed on the mounting bracket 21, the two second fitting portions 12 are located on two opposite sides of the main portion 1 in the width direction of the main portion 1 and is capable of moving in the width direction of the main portion 1, and the second limiting members 212 and the second fitting portions 12 are correspondingly disposed.

The second fitting portions 12 are disposed on two opposite sides of an end that is of the main portion 1 and that is away from the first fitting portion 11, so that connection lines between the two second fitting portions 12 and the first fitting portion 11 enclose a triangle, thereby improving mounting stability of the main portion 1. In addition, during detaching, the user may press, by using an index finger and a thumb, the second fitting portions 12 located on the two opposite sides of the main portion 1, so that the second fitting portions 12 release fitting with the second limiting members 212, which is more convenient to operate and better meets an actual use requirement.

In a possible implementation, the main portion 1 may be a foldable display structure. The second fitting portions 12 are disposed on the two opposite sides of the main portion 1 in the width direction, so that a disposition position of a hinge of a foldable display mechanism can be avoided, and the wearable device provided in embodiments of this application can adapt to the main portion 1 with a foldable screen, thereby better meeting an actual use requirement.

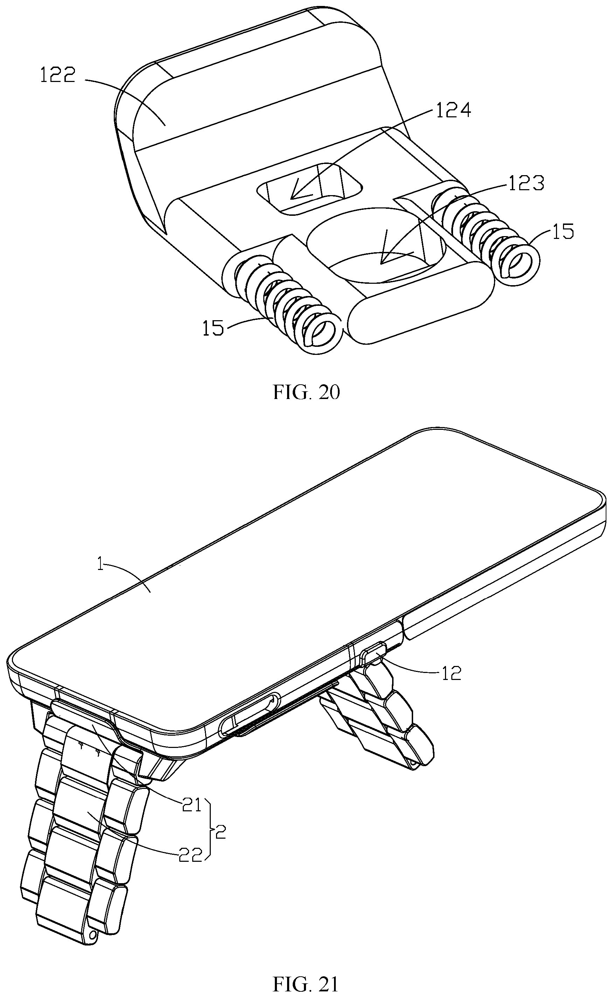

As shown in FIG. 21, when the wearable device is in an unfolded state, because the second fitting portions 12 are disposed on the two sides of the main portion 1 in the width direction, the second fitting portions 12 may be directly driven to move during detaching. When the wearable device is in a folded state or the unfolded state, mounting and detaching of the main portion 1 are not affected. Therefore, an actual use requirement is better met.

In a possible implementation, the first limiting member 211 and the first fitting portion 11 are the embodiment shown in FIG. 3, and the second limiting member 212 and the second fitting portion 12 may be the embodiment shown in FIG. 12 or FIG. 19. During mounting, the main portion 1 may move relative to the mounting bracket 21 in the thickness direction of the main portion 1. When the main portion 1 abuts against the first guiding surface 211c of the first limiting member 211, an acting force between the main portion 1 and the first guiding surface 211c can drive the first limiting member 211 to retract. In a process in which the first limiting member 211 retracts, the first elastic member 215 is compressed. When the main portion 1 moves until the first fitting portion 11 communicates with the first through hole 214a and the main portion 1 does not abut against the first limiting member 211, the first limiting member 211 is capable of extending out along the first through hole 214a and extending into the first fitting portion 11 under an action of a recovery force of the first elastic member 215, so that the first limiting member 211 fits with the first fitting portion 11. When the main portion 1 moves until the second limiting member 212 is in contact with the second guiding surface 121, as the main portion 1 continues to move, the second fitting portion 12 may be driven to move in the width direction of the wearable device. In this case, the second elastic member 15 is compressed. When the main portion 1 moves until the second guiding surface 121 releases abutting and the protrusion portion 123a is capable of extending into the first recess portion 212a, the second fitting portion 12 moves relative to the main portion 1 under an action of a recovery force of the second elastic member 15, so that the protrusion portion 123a is capable of extending into the first recess portion 212a, and the second limiting member 212 fits with the second fitting portion 12. In a mounting process, manual driving may alternatively be performed. When the first fitting portion 11 fits with the first limiting member 211 and the second fitting portion 12 fits with the second limiting member 212, mounting of the main portion 1 is completed.

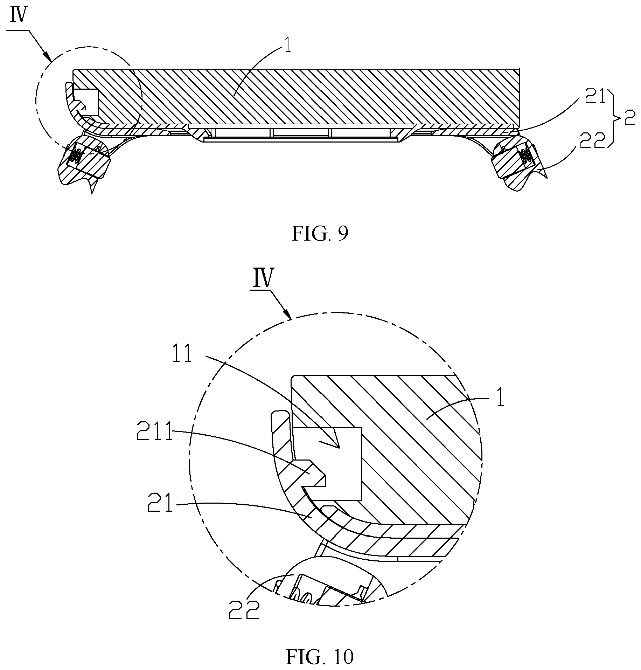

In a possible implementation, the first limiting member 211 and the first fitting portion 11 are the embodiment shown in FIG. 10, and the second limiting member 212 and the second fitting portion 12 may be the embodiment shown in FIG. 12 or FIG. 19. When the main portion 1 is mounted, the main portion 1 may be first inclined relative to the extension direction of the first limiting member 211, and the main portion 1 moves in a direction close to the first limiting member 211, so that the first limiting member 211 extends into the first fitting portion 11. The end that is of the main portion 1 and that is away from the first fitting portion 11 is pressed in the thickness direction of the wearable device. When the main portion 1 moves until the second limiting member 212 is in contact with the second guiding surface 121, as the main portion 1 continues to move, the second fitting portion 12 may be driven to move in the width direction of the wearable device. In this case, the second elastic member 15 is compressed. When the main portion 1 moves until the second guiding surface 121 releases abutting and the protrusion portion 123a is capable of extending into the first recess portion 212a, the second fitting portion 12 moves relative to the main portion 1 under an action of a recovery force of the second elastic member 15, so that the protrusion portion 123a is capable of extending into the first recess portion 212a, and the second limiting member 212 fits with the second fitting portion 12. In a mounting process, manual driving may alternatively be performed. When the first fitting portion 11 fits with the first limiting member 211 and the second fitting portion 12 fits with the second limiting member 212, mounting of the main portion 1 is completed.

When the main portion is detached, the second fitting portion 12 may be pressed, so that the second fitting portion 12 is driven to move relative to the main portion 1. In this way, the protrusion portion 123a is detached from the first recess portion 212a, to complete unlocking. The end that is of the main portion 1 and on which the second fitting portion 12 is disposed is lifted. In this case, the main portion 1 may be inclined relative to the extension direction of the first limiting member 211. The user may hold the main portion 1 to move in the direction away from the first limiting member 211, so that the main portion 1 is detached from the mounting bracket 21, and detaching is completed.

Embodiments of this application further provide an electronic device. The electronic device may be used in a wearable device as the main portion 1 in any one of the foregoing embodiments. The electronic device includes but is not limited to a host of a smartwatch, a mobile phone, a tablet computer, and the like. A structure of the electronic device may be the same as a structure of the main portion 1 in the foregoing embodiments.

Embodiments of this application further provide a mounting bracket. The mounting bracket may be used in the wearable device in any one of the foregoing embodiments and is used for mounting of the main portion 1 in any one of the foregoing embodiments. A structure of the mounting bracket 21 may be the same as a structure of the mounting bracket 21 in the foregoing embodiments.

It should be noted that a part of this patent application document includes copyright-protected content. A copyright owner reserves the copyright except copies made for the patent document or the recorded content of the patent document in the China National Intellectual Property Administration.

## Claims

1. A wearable device, wherein the wearable device comprises:
a mounting bracket (21); and
a main portion (1), wherein the main portion (1) is detachably mounted on the mounting bracket (21), wherein
a first fitting portion (11) and a second fitting portion (12) are disposed on the main portion (1), a first limiting member (211) and a second limiting member (212) are disposed on the mounting bracket (21), the first limiting member (211) is configured to fit with the first fitting portion (11), the second fitting portion (12) is capable of moving relative to the main portion (1), the second limiting member (212) has a first recess portion (212a), the second fitting portion (12) has a protrusion portion (123a), and when the second fitting portion (12) is capable of moving in a length direction or a width direction of the main portion (1) relative to the main portion (1), the protrusion portion (123a) is capable of extending into or being detached from the first recess portion (212a);
the first limiting member (211) is located on a side wall of the mounting bracket (21) and protrudes relative to the side wall of the mounting bracket (21), and is configured to limit relative positions of the main portion (1) and the mounting bracket (21) in a thickness direction of the wearable device, and the second limiting member (212) is disposed on a bottom wall of the mounting bracket (21) and extends in the thickness direction of the wearable device, and is configured to limit relative positions of the main portion (1) and the mounting bracket (21) in a length direction and/or a width direction of the wearable device;
when the protrusion portion (123a) fits with the first recess portion (212a), and the first fitting portion (11) fits with the first limiting member (211), the main portion (1) is mounted on the mounting bracket (21); and
when the protrusion portion (123a) is detached from the first recess portion (212a), the second fitting portion (12) releases fitting with the second limiting member (212), and the first fitting portion (11) is capable of being detached from the first limiting member (211).

2. The wearable device according to claim 1, wherein the first limiting member (211) is capable of moving relative to the mounting bracket (21), and when the main portion (1) is located on the mounting bracket (21), the first limiting member (211) is capable of extending into the first fitting portion (11), or the first limiting member (211) is capable of being detached from the first fitting portion (11).

3. The wearable device according to claim 2, wherein the mounting bracket (21) has a second recess portion (213), at least a part of the first limiting member (211) is located in the second recess portion (213), and the first limiting member (211) is capable of moving along the second recess portion (213), so that the first limiting member (211) is capable of extending out or retracting along an opening of the second recess portion (213).

4. The wearable device according to claim 3, wherein a first elastic member (215) is disposed between the first limiting member (211) and a bottom wall of the second recess portion (213), and when the first limiting member (211) retracts into the second recess portion (213), the first elastic member (215) is compressed, and the first elastic member (215) is configured to drive the first limiting member (211) to extend out along the opening of the second recess portion (213).

5. The wearable device according to claim 4, wherein the first limiting member (211) comprises a first limiting section (211a) and a second limiting section (211b), a cross-sectional area of the first limiting section (211a) is greater than a cross-sectional area of the second limiting section (211b), the second limiting section (211b) is located on a side that is of the first limiting section (211a) and that is away from the bottom wall of the second recess portion (213), a third limiting member (214) is disposed at the opening of the second recess portion (213), the third limiting member (214) has a first through hole (214a), the first through hole (214a) communicates with the second recess portion (213), and at least a part of the second limiting section (211b) is capable of extending out along the first through hole (214a); and
at least a part of the first limiting section (211a) abuts against a side that is of the third limiting member (214) and that faces the second recess portion (213).

6. The wearable device according to claim 5, wherein the first elastic member (215) is located on a side that is of the first limiting section (211a) and that is away from the second limiting section (211b).

7. The wearable device according to claim 4, wherein a first guiding portion (213a) is disposed on the bottom wall of the second recess portion (213), the first guiding portion (213a) protrudes relative to the bottom wall of the second recess portion (213), and at least a part of the first elastic member (215) is sleeved on the first guiding portion (213a).

8. The wearable device according to claim 5, wherein the second limiting section (211b) has a first guiding surface (211c), and the first guiding surface (211c) is located at an end that is of the second limiting section (211b) and that is away from the first limiting section (211a), and is configured to be in contact with the main portion (1).

9. The wearable device according to claim 1, wherein the first limiting member (211) and the mounting bracket (21) are integrally formed.

10. The wearable device according to any one of claims 1 to 9, wherein the first fitting portion (11) is a groove, and an extension direction of the first limiting member (211) is perpendicular to the thickness direction of the wearable device.

11. The wearable device according to any one of claims 1 to 9, wherein the first recess portion (212a) is provided on a side wall of the second limiting member (212) and extends in a radial direction of the second limiting member (212).

12. The wearable device according to claim 11, wherein a second elastic member (15) is disposed between the second fitting portion (12) and the main portion (1), and when the second fitting portion (12) moves relative to the main portion (1), the second elastic member (15) is capable of being deformed, and the second elastic member (15) is configured to drive the second fitting portion (12) to reset.

13. The wearable device according to claim 12, wherein the second fitting portion (12) has a second guiding portion (125), the second guiding portion (125) extends in a moving direction of the second fitting portion (12), and at least a part of the second elastic member (15) is sleeved on the second guiding portion (125).

14. The wearable device according to claim 11, wherein the second fitting portion (12) has a second guiding surface (121), and the second guiding surface (121) is disposed on the protrusion portion (123a) and is configured to be in contact with the second limiting member (212).

15. The wearable device according to claim 14, wherein a third guiding surface (212b) is disposed on the second limiting member (212), and the third guiding surface (212b) is configured to be in contact with the second guiding surface (121).

16. The wearable device according to claim 14, wherein the second fitting portion (12) has a second through hole (123), and when the main portion (1) is mounted on the mounting bracket (21), at least a part of the second limiting member (212) is located in the second through hole (123).

17. The wearable device according to claim 16, wherein the protrusion portion (123a) is located on a side wall of the second through hole (123).

18. The wearable device according to claim 17, wherein a side that is of the main portion (1) and that faces the second limiting member (212) has a third recess portion (14), the third recess portion (14) communicates with the second through hole (123), and when the main portion (1) is mounted on the mounting bracket (21), a part of the second limiting member (212) extends into the third recess portion (14).

19. The wearable device according to claim 14, wherein a fourth guiding surface (212c) is disposed on a side wall of the first recess portion (212a), and the fourth guiding surface (212c) is disposed in parallel to the second guiding surface (121) and is configured to abut against the second guiding surface (121).

20. The wearable device according to claim 11, wherein the main portion (1) has a fourth limiting member (13), a fourth recess portion (124) is disposed on the second fitting portion (12), and at least a part of the fourth limiting member (13) extends into the fourth recess portion (124), to limit relative positions of the second fitting portion (12) and the main portion (1).

21. The wearable device according to claim 20, wherein an extending direction of the fourth limiting member (13) is perpendicular to a moving direction of the second fitting portion (12).

22. The wearable device according to claim 20, wherein the fourth limiting member (13) comprises a first body portion (131) and a second body portion (132), the second body portion (132) is located on a side that is of the first body portion (131) and that is away from the main portion (1), a cross-sectional area of the second body portion (132) is greater than a cross-sectional area of the first body portion (131), the fourth recess portion (124) comprises a first recess structure (124a) and a second recess structure (124b) that communicate with each other, the second recess structure (124b) is located on a side that is of the first recess structure (124a) and that is away from the main portion (1), and a cross-sectional area of the second recess structure (124b) is greater than a cross-sectional area of the first recess structure (124a); and
the first body portion (131) is located in the first recess structure (124a), the second body portion (132) is located in the second recess structure (124b), and the cross-sectional area of the second body portion (132) is greater than the cross-sectional area of the first recess structure (124a).

23. The wearable device according to claim 20, wherein the second fitting portion (12) comprises a pressing portion (122), and the pressing portion (122) and the fourth recess portion (124) are located on two sides of a second through hole (123) of the second fitting portion (12) in a moving direction of the second fitting portion (12).

24. The wearable device according to claim 11, wherein the main portion (1) comprises at least two second fitting portions (12), and the mounting bracket (21) comprises at least two second limiting members (212).

25. The wearable device according to claim 24, wherein the main portion (1) comprises two second fitting portions (12), the second fitting portions (12) are located on two opposite sides of the main portion (1) in the width direction of the main portion (1), the mounting bracket (21) comprises two second limiting members (212), and the second limiting members (212) are located on two opposite sides of the mounting bracket (21) in a width direction of the mounting bracket (21); and
the first fitting portion (11) is located on a side of the main portion (1) in the length direction of the main portion (1), and the first limiting member (211) is located on a side of the mounting bracket (21) in a length direction of the mounting bracket (21).

26. An electronic device, mounted on a mounting bracket (21), wherein the electronic device comprises:
a first fitting portion (11), wherein the first fitting portion (11) is disposed on a side wall of the electronic device and is configured to fit with a first limiting member (211) of the mounting bracket (21); and
a second fitting portion (12), wherein the second fitting portion (12) has a protrusion portion (123a), and the second fitting portion (12) is disposed on a bottom wall of the electronic device and is capable of moving in a length direction or a width direction of the electronic device, and is configured to fit with a second limiting member (212) of the mounting bracket (21) by using the protrusion portion (123a), wherein
the electronic device is capable of being used as the main portion (1) according to any one of claims 1 to 25.

27. The electronic device according to claim 26, wherein the first fitting portion (11) is a groove, and when the electronic device is mounted on the mounting bracket (21), at least a part of the first limiting member (211) is capable of extending into the first fitting portion (11).

28. The electronic device according to claim 26, wherein the second fitting portion (12) is mounted on the electronic device by using a second elastic member (15).

29. The electronic device according to claim 26, wherein the second fitting portion (12) has a second through hole (123), and when the electronic device is mounted on the mounting bracket (21), at least a part of the second limiting member (212) is located in the second through hole (123).

30. The electronic device according to claim 26, wherein the electronic device has a fourth limiting member (13), the second fitting portion (12) has a fourth recess portion (124), and at least a part of the fourth limiting member (13) extends into the fourth recess portion (124);
the fourth limiting member (13) comprises a first body portion (131) and a second body portion (132), the second body portion (132) is located on a side that is of the first body portion (131) and that is away from the main portion (1), a cross-sectional area of the second body portion (132) is greater than a cross-sectional area of the first body portion (131), the fourth recess portion (124) comprises a first recess structure (124a) and a second recess structure (124b) that communicate with each other, the second recess structure (124b) is located on a side that is of the first recess structure (124a) and that is away from the main portion (1), and a cross-sectional area of the second recess structure (124b) is greater than a cross-sectional area of the first recess structure (124a); and
the first body portion (131) is located in the first recess structure (124a), the second body portion (132) is located in the second recess structure (124b), and the cross-sectional area of the second body portion (132) is greater than the cross-sectional area of the first recess structure (124a).

31. The electronic device according to any one of claims 26 to 30, wherein the electronic device comprises at least two second fitting portions (12), and the second fitting portions (12) are symmetrically distributed in the length direction or the width direction of the electronic device.

32. A mounting bracket for mounting of a main portion (1), wherein the mounting bracket (21) comprises:
a first limiting member (211), wherein the first limiting member (211) is located on a side wall of the mounting bracket (21) and is configured to fit with a first fitting portion (11) of the main portion (1); and
a second limiting member (212), wherein the second limiting member (212) is located on a bottom wall of the mounting bracket (21) and is configured to fit with a second fitting portion (12) of the main portion (1), wherein
at least a part of the first limiting member (211) is capable of extending into the first fitting portion (11), the second limiting member (212) has a first recess portion (212a), and the first recess portion (212a) is configured to accommodate a protrusion portion (123a) of the second fitting portion (12); and
the mounting bracket (21) is used in the wearable device according to any one of claims 1 to 25.

33. The mounting bracket according to claim 32, wherein the first limiting member (211) is capable of moving relative to the mounting bracket (21).

34. The mounting bracket according to claim 32, wherein the first limiting member (211) and the mounting bracket (21) are integrally formed.

35. The mounting bracket according to any one of claims 32 to 34, wherein the mounting bracket (21) comprises at least two second limiting members (212), and the second limiting members (212) are spaced apart in a length direction or a width direction of the mounting bracket (21).
